# EUROPÄISCHE PATENTANMELDUNG

(11) **EP 4 671 188 A1**
(43) Veröffentlichungstag der Anmeldung: **31.12.2025**
(21) Anmeldenummer: 24185163.3
(22) Anmeldetag: 27.06.2024
(51) Int. Cl.: B66F 9/075, B66F 17/00, G05D 1/639

(54) **FAHRERLOSES FLURFÖRDERZEUG MIT EINER ERKENNUNGSEINRICHTUNG SOWIE VERFAHREN ZUM BETRIEB EINES FAHRERLOSEN FLURFÖRDERZEUGS**

(71) Anmelder: Jungheinrich AG, 22047 Hamburg (DE)
(72) Erfinder: Flottran, Dennis, 23881 Breitenfelde (DE)
(74) Vertreter: Hauck Patent- und Rechtsanwälte PartmbB

(57) **Zusammenfassung**

Fahrerloses Flurförderzeug (10) mit mindestens einer Erkennungseinrichtung für Personen und/oder Gegenstände in einem Schutzfeld (14), die einen Notstopp für das Flurförderzeug (10) auslösen kann, wobei für vorbestimmte Betriebsgefahrbereiche vorgesehen ist, dass die Erkennungseinrichtung gemutet werden kann, wobei zusätzlich eine Fluchtwegüberwachungseinrichtung vorgesehen ist, die mindestens einen vorbestimmten Fluchtwege (1, 2, 3) relativ zu dem Flurförderzeug auf Personen und/oder Gegenstände überwacht, wobei die Fluchtwegüberwachungseinrichtung einen Notstopp auslöst, wenn die Erkennungseinrichtung gemutet und kein Fluchtweg (1, 2, 3) mit einer vorbestimmten Breite relativ zu dem Flurförderzeug (10) frei ist.

## Beschreibung

Die vorliegende Erfindung betrifft ein fahrerloses Flurförderzeug mit mindestens einer Erkennungseinrichtung für Personen und/oder Gegenstände in einem Schutzfeld. Ebenso betrifft die Erfindung ein Verfahren zum Betrieb des fahrerlosen Flurförderzeugs, das eine Erkennungseinrichtung für Personen und/oder Gegenstände in einem Schutzfeld aufweist.

Fahrerlose Flurförderzeuge (Automatic Guided Vehicles = AGV) und mobile Roboter sind im Interesse des Personenschutzes mit Laserscannern ausgestattet, die ein oder mehrere Schutzfelder in der Umgebung des Flurförderzeuges überwachen. Wird in dem Schutzfeld eine Person oder ein Gegenstand erfasst, so wird das Flurförderzeug mit einem Notstopp zum Stehen gebracht. Sicherheitsnormen, wie beispielsweise die IEC 62046:2018 im Abschnitt 4.7.3 schreiben vor, dass die Erkennungssituation für vorbestimmte Betriebsgefahrbereiche gemutet werden kann. Muting ist dabei eine zeitweise automatische Unterdrückung der Erkennungseinrichtung. Ein solches Muting kann beispielsweise vorgesehen sein, wenn eine manuelle Bedienung des Flurförderzeugs erfolgt.

Genauer differenziert wird das Muting beispielsweise in DIN EN ISO 3691-4:2023-12, wo für Flurförderzeuge, die innerhalb eines Betriebsgefahrbereichs arbeiten, weitergehende Anforderungen gestellt werden, wenn die Erkennungseinrichtung für Personen und/oder Gegenstände gemutet werden muss. Betriebsgefahrbereiche sind solche Teile des Betriebsbereichs, in denen eine Person einer Quetsch-/Stoßgefahr ausgesetzt sein kann. Zur Begrenzung oder Deaktivierung der Erkennungseinrichtung kann es beispielsweise erforderlich sein, wenn in einem Betriebsgefahrbereich, wie beispielsweise einer Lastübergabestation, nicht ausreichend Platz vorhanden ist, um mit aktiviertem Schutzfeld die vorgesehenen Fahrmanöver durchzuführen, beispielsweise, weil eine Durchfahrt hierfür zu schmal ist. Dann ist es erforderlich, das Schutzfeld zu muten und zusätzliche Sicherheitsmaßnahmen vorzusehen. Hier ist für die DIN EN ISO 3691-4:2023-12 vorgesehen, dass beispielsweise bei einer Stummschaltung (mute) der Personenerkennungseinrichtung für den Fall, dass die Gefahr einer Kollision mit einer Person besteht, im Automatikbetrieb Geschwindigkeiten von mehr als 0,3 m/s nicht mehr möglich sind. Das Fahrzeug bewegt sich also bei stummgeschalteter Personenerkennungseinrichtung mit einer Geschwindigkeit von weniger als 0,3 m/s, wodurch die Gefahr von Quetschungen vermieden wird.

Der Erfindung liegt die Aufgabe zugrunde, ein fahrerloses Flurförderzeug sowie ein Verfahren zu dessen Betrieb bereitzustellen, die mit einfachen Mitteln die Sicherheit für Personen bei gemuteter (stummgeschalteter) Erkennungseinrichtung für Personen und/oder Gegenstände verbessert.

Erfindungsgemäß wird die Aufgabe durch ein fahrerloses Flurförderzeug mit den Merkmalen aus Anspruch 1 sowie ein Verfahren mit den Merkmalen aus Anspruch 10 gelöst.

Das erfindungsgemäße fahrerlose Flurförderzeug besitzt die Merkmale aus Anspruch 1. Das fahrerlose Flurförderzeug ist mit mindestens einer Erkennungseinrichtung für Personen und/oder Gegenstände in einem Schutzfeld ausgestattet. Gelegentlich wird diese Erkennungseinrichtung auch als Personenerkennungseinrichtung bezeichnet, wobei diese auch auf Gegenstände in ihrem Schutzfeld anspricht. Die Erkennungseinrichtung ist dazu ausgelegt, dass sie einen Notstopp für das Flurförderzeug auslösen kann. In vorbestimmten Betriebsgefahrbereichen ist vorgesehen, dass die Erkennungseinrichtung gemutet, also stummgeschaltet werden kann. Gemutet bedeutet, dass die Erkennungseinrichtung stumm geschaltet ist und in diesem Zustand kein Notstopp durch Auslösung eines Schutzfeldes erfolgt. Zusätzlich zu der Erkennungseinrichtung für Personen und/oder Gegenstände ist eine Fluchtwegüberwachungseinrichtung vorgesehen. Die Fluchtwegüberwachungseinrichtung überwacht den mindestens einen vorbestimmten Fluchtweg relativ zu dem Flurförderzeug auf Personen und/oder Gegenstände hin. Es wird also überwacht, ob der mindestens eine vorbestimmte Fluchtweg frei ist. Die Fluchtwegüberwachungseinrichtung löst erfindungsgemäß einen Notstopp aus, wenn die Erkennungseinrichtung gemutet ist und keiner der mindestens eine Fluchtweg in seiner vorbestimmten Breite relativ zu dem Flurförderzeug frei ist. Bei der Fluchtwegüberwachungseinrichtung handelt es sich also um eine zusätzliche Schutzeinrichtung, bevorzugt im Sinne einer zusätzlichen Software-Funktionalität, die es erlaubt, dass das fahrerlose Flurförderzeug in Betriebsgefahrbereichen mit gemuteter Erkennungseinrichtung für Personen und/oder Gegenstände weiter zu betreiben. Ein entscheidender Aspekt hierbei ist, dass für die Betriebsgefahrbereiche sichergestellt wird, dass der mindestens eine Fluchtweg mit einer vorbestimmten Breite relativ zu dem Flurförderzeug frei bleibt. Hierbei ist ein Fluchtweg ein Bereich mit vorbestimmter Breite oder einer Mindestbreite an zumindest einer Seite des Flurförderzeugs. Einer im Betriebsgefahrbereich arbeitenden Person bleibt also bei gemuteter Erkennungseinrichtung immer die Möglichkeit, sich auf dem vorhandenen Fluchtweg aus der Situation zu entfernen und so die Gefahr von Verletzungen oder überhaupt Kontakt mit dem fahrerlosen Flurförderzeug zu vermeiden.

In einer bevorzugten Ausgestaltung überwacht die Fluchtwegüberwachungseinrichtung seitlich vom vorgesehenen Fahrweg liegende Fluchtwege mit einer vorbestimmten Seitenbreite und mindestens einen in Richtung des vorgesehenen Fahrwegs liegenden Fluchtweg mit einer vorbestimmten Querbreite. Seiten- und Querbreite bezeichnen dabei den Abstand von einer Fahrzeugkontur. Für die vorbestimmte Seiten- und Querbreite wird bevorzugt eine Mindestbreite von 250 mm oder mehr und besonders bevorzugt von 500 mm oder mehr gewählt, wobei Seitenbreite und Querbreite der Fluchtwege nicht identisch sein müssen. Die seitlich zum vorgesehenen Fahrweg liegenden Fluchtwege schließen auf ihrer Innenseite immer direkt an das Flurförderzeug an. Mit der vorgegebenen Unterscheidung von seitlichen Fluchtwegen und in Richtung des vorgesehenen Fahrwegs liegendem Fluchtweg wird deutlich, dass mindestens drei Fluchtwege für das fahrerlose Flurförderzeug vorgesehen sind. Hierbei ist zu beachten, dass ein Fluchtweg nicht zwingend eine rechteckige Gestalt besitzen muss, sondern auch in Form und Gestalt variieren kann. Wenn also die Bedingung lautet, dass der mindestens eine Fluchtweg frei ist oder bleibt, so bedeutet dies bei einer Mehrzahl von Fluchtwegen, dass mindestens einer der Fluchtwege nicht anspricht und frei ist. Indem einer von mehreren Fluchtwegen frei ist, steht ein Fluchtweg zur Verfügung.

In einer bevorzugten Weiterbildung löst die Fluchtwegüberwachungseinrichtung das Muting für die Erkennungseinrichtung auf, wenn kein Betriebsgefahrbereich vorliegt und keine Person oder Gegenstand erfasst ist. Das Muting für die Erkennungseinrichtung kann also nur beendet werden, wenn der Betriebsgefahrbereich verlassen wurde und keine Person bzw. kein Gegenstand weiter erfasst wird. Dies erhöht die Sicherheit im Vergleich zu einer Lösung, die lediglich beim Verlassen des Betriebsgefahrbereichs bereits das Muting auflöst. Die Bestimmung, ob ein Betriebsgefahrenbereich vorliegt, kann beispielsweise von einer zentralen Steuereinheit an das Flurförderzeug kommuniziert werden, abhängig von der ermittelten Position des Flurförderzeugs. Alternativ könnte das Flurförderzeug auch durch eine entsprechende Sensorik den Eintritt und Austritt in bzw. aus entsprechenden Gefahrenbereichen selbständig erfassen.

In einer bevorzugten Weiterbildung kann die Fluchtwegüberwachungseinrichtung auch außerhalb des Betriebsgefahrbereichs einen Notstopp auslösen, wenn keiner der überwachten Fluchtwege frei ist. Dies ist eine zusätzliche Sicherheitsmaßnahme, da Gefahr durch das Flurförderzeug gerade in dem Betriebsgefahrbereich auftreten kann. Indem der Notstopp auch außerhalb des Betriebsgefahrbereichs ausgelöst wird, wird vermieden, dass eine Person in eine Gefahrensituation gerät, nur weil eine fehlerhafte Betriebsgefahrbereichserkennung erfolgt.

In einer bevorzugten Weiterbildung ist vorgesehen, dass die Fluchtwegüberwachungseinrichtung ein automatisches Wiederanfahren nach dem Notstopp nur nach einer manuellen Quittierung gestattet. Das Wiederanfahren ist somit bis zu einer manuellen Quittierung gesperrt. Die manuelle Quittierung erfolgt, indem eine Person vor Ort und am Flurförderzeug den Notstopp bestätigt, um so das Wiederanfahren zuzulassen. Die Bestätigung kann beispielsweise durch einen Taster oder dergleichen an dem fahrerlosen Flurförderzeug erfolgen, wobei hierzu eine Person an dem Fahrzeug anwesend ist. Die Fluchtwegüberwachungseinrichtung setzt nach der manuellen Quittierung auch in Betriebsgefahrbereichen mit gemuteter Erkennungseinrichtung den Betrieb fort, wenn mindestens einer der Fluchtwege frei ist. Hierdurch ist es möglich, nach der Quittierung weiterhin mit dem fahrerlosen Flurförderzeug zu arbeiten.

In einer bevorzugten Weiterbildung ist vorgesehen, dass eine Fahrgeschwindigkeit für das Flurförderzeug auf eine maximal zulässige Höchstgeschwindigkeit bei gemuteter Erkennungseinrichtung für Personen begrenzt ist. Die maximal zulässige Höchstgeschwindigkeit kann 0,3 m/s oder weniger betragen.

In einer bevorzugten Weiterbildung ist vorgesehen, dass der mindestens eine Fluchtweg eine Breite von 500 mm oder mehr aufweist und außerhalb der von der Erkennungseinrichtung für Personen überwachten Bereiche liegt oder über diese hinaus nach außen erstreckt. 500 mm oder mehr sind ein ausreichender Platz für einen sicheren Fluchtweg, ohne die Arbeit des Flurförderzeugs übermäßig einzuschränken.

In einer bevorzugten Weiterbildung wird das Muting für Personen außerhalb der Betriebsgefahrbereiche aufgehoben, wenn die Fluchtwegüberwachungseinrichtung mindestens einen freien Fluchtweg anzeigt. Dieser Schritt kann mit oder ohne manuelles Quittieren erfolgen.

In einer bevorzugten Weiterbildung wird die erfindungsgemäße Aufgabe ebenfalls durch ein Verfahren zum Betrieb des fahrerlosen Flurförderzeugs gelöst. Das Verfahren ist vorgesehen und bestimmt für den Betrieb eines fahrerlosen Flurförderzeugs. Das Flurförderzeug besitzt mindestens eine Erkennungseinrichtung für Personen und/oder Gegenstände in einem Schutzfeld. Es ist ferner mit einer Fluchtwegüberwachungseinrichtung ausgestattet. Für vorbestimmte Betriebsgefahrbereiche ist vorgesehen, dass die Erkennungseinrichtung gemutet wird. Das Verfahren weist folgende Schritte auf:

Die Erkennungseinrichtung für Personen löst außerhalb der Betriebsgefahrbereiche einen Notstopp aus, wenn eine Person oder ein Gegenstand im Schutzfeld erkannt wird. Ferner ist vorgesehen, dass die Erkennungseinrichtung für Personen innerhalb von Betriebsgefahrbereichen gemutet werden kann, sodass die Erkennungseinheit in entsprechenden Situationen keinen Notstopp auslöst. Dieses Muting der Erkennungseinrichtung ist notwendig, um auch in Bereichen arbeiten zu können, in denen wenig Platz für das Flurförderzeug zur Verfügung steht und notwendige Fahrmanöver bei eingeschalteter Erkennungseinrichtung die Gefahr ungewollter Notstoppsituationen erzeugen, weil hierbei beispielsweise Wände oder Regale die Schutzfelder verletzen würden. Das Verfahren sieht ferner vor, dass die Fluchtwegüberwachungseinrichtung in den Betriebsgefahrbereichen mindestens einen Fluchtweg in einer vorbestimmten Breite relativ zu dem Flurförderzeug überwacht. Es wird also sichergestellt, dass auch bei gemuteter Erkennungseinrichtung in dem Betriebsgefahrbereich mindestens ein Fluchtweg mit einer vorbestimmten Breite überwacht wird. Das erfindungsgemäße Verfahren löst einen Notstopp bei gemuteter Erkennungseinrichtung für Personen aus, wenn kein Fluchtweg frei ist. Das Flurförderzeug kann also mit gemuteter Erkennungseinrichtung für Personen in dem Betriebsgefahrbereich weiter betrieben werden. Als zusätzliche Sicherheitsmaßnahme ist die Fluchtwegüberwachungseinrichtung vorgesehen, die einen Notstopp auslöst, wenn kein Fluchtweg verbleibt.

In einer bevorzugten Weiterbildung des Verfahrens ist die Fluchtwegüberwachungseinrichtung dazu eingerichtet, seitlich zum Flurförderzeug liegende Fluchtwege mit einer vorbestimmten Seitenbreite und mindestens einem in Längsrichtung des Flurförderzeugs vorgesehenen Fluchtweg mit einer vorbestimmten Querbreite zu überwachen. Solange einer dieser Fluchtwege frei bleibt, kann das Flurförderzeug weiter betrieben werden.

In einer bevorzugten Weiterbildung des erfindungsgemäßen Verfahrens ist vorgesehen, einen Notstopp dann auszulösen, wenn keiner der überwachten Fluchtwege frei ist, auch wenn die Erkennungseinrichtung nicht gemutet ist. Dieser zusätzliche Schritt zum Auslösen des Notstopps stellt sicher, dass auch keine Gefahr auftreten kann, wenn ein Betriebsgefahrbereich nicht zuverlässig erkannt wurde.

Die Erfindung wird nachfolgend an einem Ausführungsbeispiel näher erläutert.
- Figur 1a: zeigt den Grundzustand für ein Flurförderzeug mit drei Fluchtwegen und einem Schutzfeld,
- Figur 1b: zeigt eine Situation, in der das Schutzfeld gemutet ist und die Fluchtwegen 1, 2 und 3 überwacht werden,

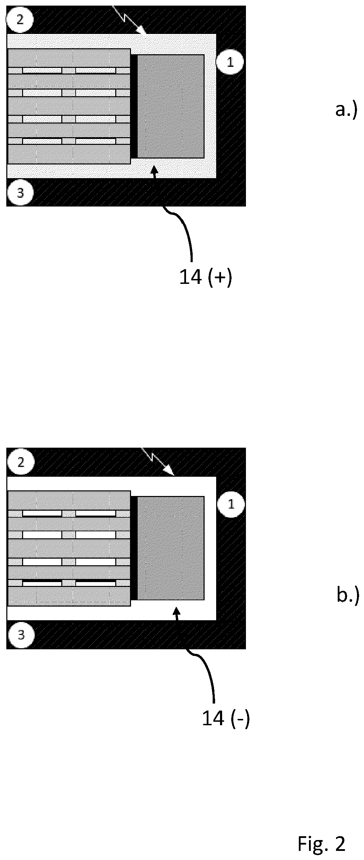

- Figuren 2a, 2b: zeigen einen ausgelösten Notstopp einmal bei aktivierter Personenerkennung (2a) und bei nicht aktivierter Personenerkennung (2b),
- Figuren 3a, 3b, 3c: zeigen eine Situation mit gemutetem Schutzfeld, bei der kein Notstopp ausgelöst wird.
- Figur 4: zeigt eine Situation, bei der für das Auflösen des Mutens mindestens ein Fluchtweg frei sein muss,
- Figur 5: zeigt beispielhaft den Ablauf in drei Phasen mit der Aktivierung des Mutings, dem Betrieb mit aktiviertem Muting sowie das deaktivierte Muting.

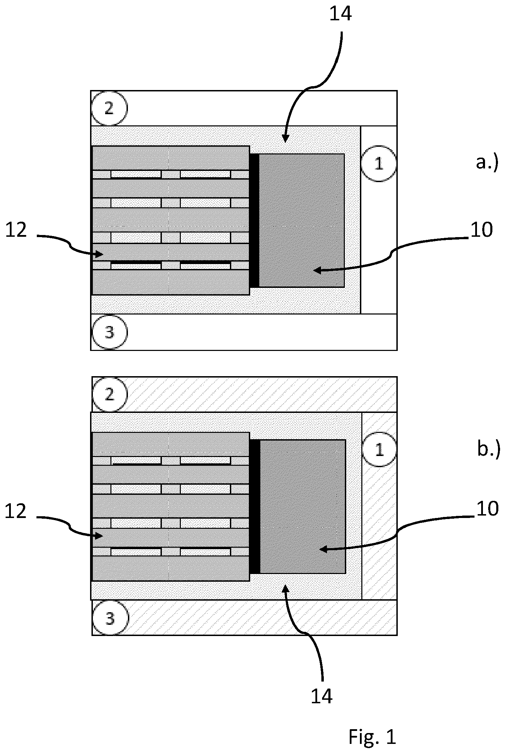

Figur 1a zeigt ein fahrerloses Flurförderzeug 10, dass eine Palette 12 bewegt. Die Palette 12 ist zur besseren Übersicht leer dargestellt. Das fahrerlose Flurförderzeug 10 besitzt ein Schutzfeld 14. Im regulären Betrieb des Flurförderzeugs 10 bedeutet eine Person oder ein Gegenstand in dem Schutzfeld 14, dass ein Notstopp für das Flurförderzeug ausgelöst wird.

Für das Flurförderzeug 10 können in Betriebsgefahrbereichen Situationen auftreten, in denen für den gewünschten Betrieb des Flurförderzeugs 10 eine Verletzung des Schutzfelds 14 nicht vermieden werden kann. Beispielsweise kann es bei der Durchfahrt einer Engstelle erforderlich sein, dass das Flurförderzeug 10 nah an die Engstelle heranfährt und so das Schutzfeld 14 einen Gegenstand erfasst. In dieser Situation wird eigentlich der Notstopp ausgelöst, wodurch das Durchfahren mit dem Flurförderzeug an Engstellen erschwert wird. Um das Flurförderzeug auch in diesen Bereichen weiter betreiben zu können, ist ein Stummschalten (muting) des Schutzfelds grundsätzlich möglich. Allerdings macht ein solches Stummschalten des Schutzfeldes 14 es erforderlich, dass mit anderen Mitteln die Sicherheit von Personen in der Nähe des Flurförderzeugs sichergestellt wird.

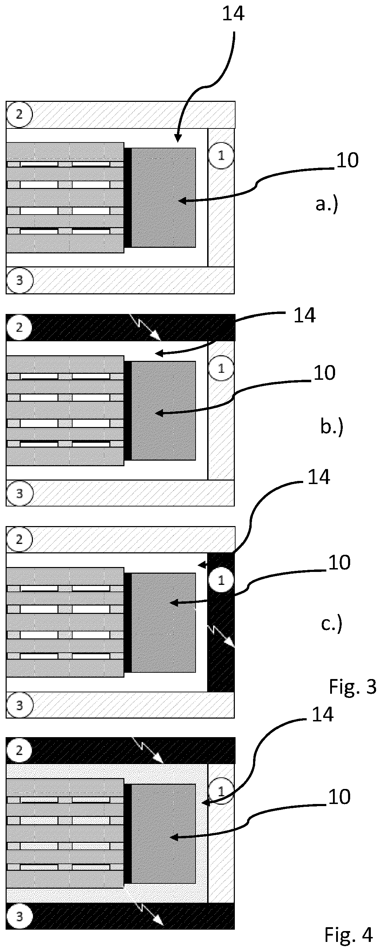

Figur 1b zeigt in einer schematischen Ansicht die zu diesem Zweck überwachten Fluchtwege 1, 2 und 3. In der der Figur 3a entsprechenden Darstellung sind alle drei Fluchtwege frei und das Flurförderzeug 10 kann sich auch mit gemutetem Schutzfeld 14 bewegen. In Figuren 3b und 3c ist der Fluchtweg 2 bzw. 1 für das Flurförderzeug durch eine Person oder ein unerwartetes Objekt aktiviert. Gleichwohl ist ein weiterer Betrieb des Flurförderzeugs auch bei gemutetem Schutzfeld 14 möglich. Erst wenn (nicht dargestellt) die Fluchtwege 1, 2 und 3 aktiviert sind, würde ein Notstopp ausgelöst werden. Deutlich wird an den Beispielen aus Figur 3b und 3c, dass das Flurförderzeug 10 weiter betrieben werden kann, also beispielsweise auch an einer Engstelle, die seitlich des Flurförderzeugs einen Fluchtwegbereich 2 oder in Längsrichtung den Fluchtweg 1 auslöst.

Figur 4 betrifft die Situation, in der das Schutzfeld 14 wieder aktiviert wird. Deutlich zu erkennen ist, dass, obwohl die Fluchtwegbereiche 2 und 3 auslösen, der freie Fluchtweg 1 genügt, um an dem Flurförderzeug das Schutzfeld 14 wieder zu aktivieren, wobei das Schutzfeld 14 neben dem Fluchtweg 1 für die Aktivierung frei sein muss.

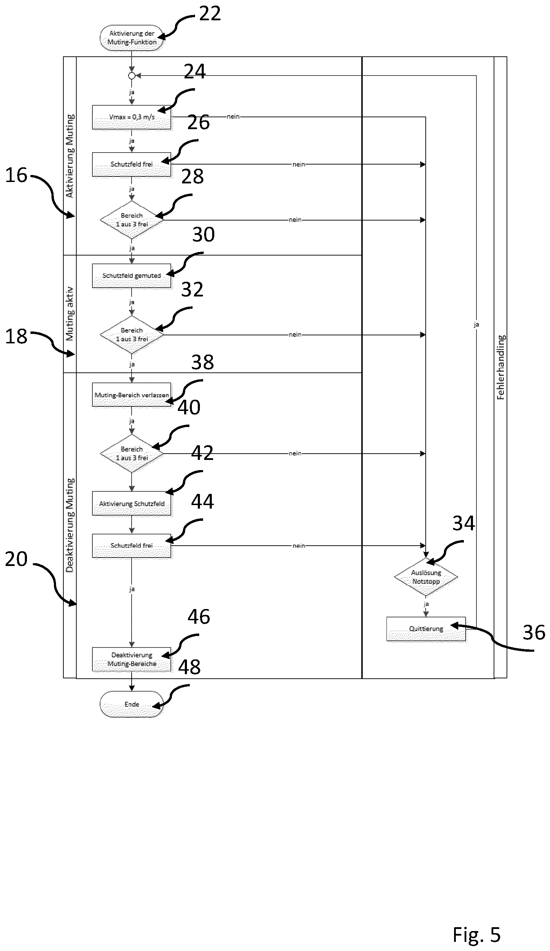

Das Flussdiagramm in Figur 5 zeigt einen ersten Bereich 16, in dem eine Aktivierung des Mutings durchgeführt wird. In einem anschließenden Bereich 18 wird das Fahrzeug mit aktiviertem Muting betrieben. Der nachfolgende Abschnitt 20 beschreibt wie das Muting deaktiviert wird.

Das Verfahren beginnt in Schritt 22 mit der Aktivierung des Mutings. In einem ersten Schritt des Aktivierungsvorgangs 16 wird die zulässige Höchstgeschwindigkeit des Flurförderzeugs auf vₘₐₓ gleich 0,3 m/s gesetzt. Anschließend wird in Schritt 26 geprüft, ob das Schutzfeld frei ist. In der nachfolgenden Abfrage 28 wird geprüft, ob mindestens einer der drei Fluchtwege 1, 2, 3 frei ist. Die räumliche Anordnung der Fluchtwege kann in diesem Ausführungsbeispiel wie in den vorstehenden Figuren gesehen werden.

Ist die Bedingung 28 erfüllt, so kann in Schritt 18 das Muting aktiviert werden und das Schutzfeld somit zeitweise deaktiviert werden. Nun erfolgt erneut die Abfrage 32, ob mindestens ein überwachter Fluchtweg frei ist. Ist dies nicht der Fall, sind also sämtliche Fluchtwege besetzt, so wird von der Abfrage 32 zu dem Notstopp 34 geschaltet. Der Notstopp 34 kann nur nach einer manuellen Quittierung 36 verlassen werden. Soll im Anschluss an das aktivierte Muting der Betriebsgefahrbereich verlassen werden, so wird in Schritt 38 die Anforderung gesetzt den Muting-Bereich zu verlassen. Wichtig bei dem Schritt 38 zum Verlassen des Muting-Bereichs ist, dass nachfolgend in Schritt 40 abgefragt wird, ob mindestens einer der Fluchtwege frei ist. Nur wenn mindestens einer der Fluchtwege frei ist, wird in Schritt 42 das Suchfeld der Erkennungseinrichtung für Personen aktiviert und in Schritt 44 überprüft, ob dieses frei ist. Nur wenn die Bedingung 40, dass mindestens ein Fluchtweg frei ist und die Bedingung 44, dass das aktivierte Schutzfeld frei ist, erfüllt sind, erfolgt eine Deaktivierung der Muting-Funktionalität, also mithin ein Übergang in den regulären Betrieb. Das Verfahren endet mit Schritt 48.

## Patentansprüche

1. Fahrerloses Flurförderzeug mit mindestens einer Erkennungseinrichtung für Personen und/oder Gegenstände in einem Schutzfeld, die einen Notstopp für das Flurförderzeug auslösen kann, wobei für vorbestimmte Betriebsgefahrbereiche vorgesehen ist, dass die Erkennungseinrichtung gemutet werden kann, **dadurch gekennzeichnet, dass** zusätzlich eine Fluchtwegüberwachungseinrichtung vorgesehen ist, die mindestens einen vorbestimmten Fluchtwege relativ zu dem Flurförderzeug auf Personen und/oder Gegenstände überwacht, wobei die Fluchtwegüberwachungseinrichtung einen Notstopp auslöst, wenn die Erkennungseinrichtung gemutet und kein Fluchtweg mit einer vorbestimmten Breite relativ zu dem Flurförderzeug frei ist.

2. Fahrerloses Flurförderzeug nach Anspruch 1, **dadurch gekennzeichnet, dass** die Fluchtwegüberwachungseinrichtung seitlich zum Fahrzeug liegende Fluchtwege mit einer vorbestimmter Seitenbreite und mindestens einen in Längsrichtung des Fahrzeugs liegenden Fluchtweg mit einer vorbestimmten Querbreite überwacht.

3. Fahrerloses Flurförderzeug nach Anspruch 1 oder 2, **dadurch gekennzeichnet, dass** die Fluchtwegüberwachungseinrichtung das Muting für die Erkennungseinrichtung auflöst, wenn kein Betriebsgefahrbereich vorliegt und keine Person oder Gegenstand erfasst ist.

4. Fahrerloses Flurförderzeug nach einem der Ansprüche 1 bis 3, **dadurch gekennzeichnet, dass** die Fluchtwegüberwachungseinrichtung auch außerhalb des Betriebsgefahrbereichs einen Notstopp auslöst, wenn keiner der überwachten Fluchtwege frei ist.

5. Fahrerloses Flurförderzeug nach Anspruch 4, **dadurch gekennzeichnet, dass** die Fluchtwegüberwachungseinrichtung ein automatisches Wiederanfahren nach dem Notstopp bis zu einer manuellen Quittierung durch einen Bediener sperrt.

6. Fahrerloses Flurförderzeug nach Anspruch 5, **dadurch gekennzeichnet, dass** die Fluchtwegüberwachungseinrichtung nach der manuellen Quittierung auch in Betriebsgefahrbereichen mit gemuteter Erkennungseinrichtung für Personen den Betrieb fortsetzt.

7. Fahrerloses Flurförderzeug nach einem der Ansprüche 1 bis 6, **dadurch gekennzeichnet, dass** eine Fahrgeschwindigkeit für das Flurförderzeug auf eine maximal zulässige Höchstgeschwindigkeit bei gemuteter Erkennungseinrichtung für Personen begrenzt ist.

8. Fahrerloses Flurförderzeug nach einem der Ansprüche 1 bis 7, **dadurch gekennzeichnet, dass** der mindestens eine Fluchtweg eine Breite von 500 mm oder mehr aufweist und außerhalb der von der Erkennungseinrichtung für Personen überwachten Bereiche liegt.

9. Fahrerloses Flurförderzeug nach einem der Ansprüche 1 bis 8, **dadurch gekennzeichnet, dass** das Muting für die Erkennungseinrichtung für Personen außerhalb der Betriebsgefahrbereichen aufhebbar ist, wenn das Schutzfeld frei ist sowie vorzugsweise die Fluchtwegüberwachungseinrichtung mindestens einen freien Fluchtweg anzeigt.

10. Fahrerloses Flurförderzeug nach einem der Ansprüche 1 bis 9, **dadurch gekennzeichnet, dass** die Fluchtwegüberwachungseinrichtung dazu ausgelegt ist, aktiviert zu werden, wenn die Erkennungseinrichtung für Personen gemutet wird.

11. Verfahren zum Betrieb eines fahrerlosen Flurförderzeugs, das mindestens eine Erkennungseinrichtung für Personen und/oder Gegenstände in einem Schutzfeld und zusätzlich eine Fluchtwegüberwachungseinrichtung aufweist, wobei für vorbestimmte Betriebsgefahrbereiche vorgesehen ist, dass die Erkennungseinrichtung gemutet wird, das Verfahren weist folgende Schritte auf:
- die Erkennungseinrichtung für Personen löst außerhalb der Betriebsgefahrbereiche einen Notstopp aus, wenn eine Person oder ein Gegenstand im Schutzfeld erkannt wird,
- die Erkennungseinrichtung für Personen wird innerhalb der Betriebsgefahrbereiche gemutet, so dass die Erkennungseinrichtung in dem Betriebsgefahrbereich keinen Notstopp auslöst,
- die Fluchtwegüberwachungseinrichtung überwacht in den Betriebsgefahrbereichen mindestens einen Fluchtweg mit einer vorbestimmten Breite relativ zu dem Flurförderzeug,
- und ein Notstopp wird bei gemuteter Erkennungseinrichtung für Personen ausgelöst, wenn kein Fluchtweg frei ist.

12. Verfahren nach Anspruch 11, **dadurch gekennzeichnet, dass** die Fluchtwegüberwachungseinrichtung dazu eingerichtet ist, seitlich zum Flurförderzeug liegende Fluchtwege mit einer vorbestimmter Seitenbreite und mindestens einen in Längsrichtung des Flurförderzeuges vorgesehenen Fluchtweg mit einer vorbestimmten Querbreite zu überwachen.

13. Verfahren nach Anspruch 12, **dadurch gekennzeichnet, dass** das Muting für die Erkennungseinrichtung für Personen beendet werden kann, wenn kein Betriebsgefahrbereich vorliegt und keine Person oder Gegenstand im Schutzfeld erfasst ist sowie vorzugsweise mindestens ein Fluchtweg frei ist.

14. Verfahren nach einem der Ansprüche 10 bis 13, **dadurch gekennzeichnet, dass** das Muting für die Erkennungseinrichtung für Personen aktiviert werden kann, wenn ein Betriebsgefahrbereich vorliegt und keine Person oder Gegenstand im Schutzfeld erfasst ist sowie mindestens ein Fluchtweg frei ist.

15. Verfahren nach einem der Ansprüche 10 bis 14, **dadurch gekennzeichnet, dass** ein automatisches Wiederanfahren nach dem Notstopp nach einer manuellen Quittierung erfolgen kann.
